# EUROPEAN PATENT SPECIFICATION

(11) **EP 2 826 582 B1**
(45) Date of publication and mention of the grant of the patent: **06.04.2016**
(21) Application number: 13176898.8
(22) Date of filing: 17.07.2013
(51) Int. Cl.: B23D 57/00

(54) **Wire saw device and method of manufacturing thereof**
Drahtsägenvorrichtung und Herstellungsverfahren dafür
Dispositif de sciage par fil et son procédé de fabrication

(43) Date of publication of application: 21.01.2015
(73) Proprietor: Applied Materials Switzerland Sàrl, 1033 Cheseaux-sur-Lausanne (CH)
(72) Inventor: Schmid, Andreas, 3280 Meyriez (CH); Merçay, Guillaume, 1008 Prilly (CH); Mittaz, Alexandre, 1076 Ferlens (CH)
(74) Representative: Zimmermann & Partner Patentanwälte mbB

(56) References cited:
- EP-A1- 2 154 414
- EP-A1- 2 586 554
- WO-A1-03/076152
- WO-A1-2008/010309
- DE-A1-102009 020 368
- DE-U1- 20 318 240
- JP-A- H02 198 759
- KR-A- 20110 089 690
- US-A1- 2004 103 741

## Description

### TECHNICAL FIELD OF THE INVENTION

Embodiments of the invention generally relate to an apparatus and method for forming thin substrates from an ingot. The present invention relates to wire sawing devices according to the preamble of claim 1 systems including a plurality of wire sawing devices. The invention is particularly useful for fabrication of thin crystalline silicon solar cell substrates from a formed crystalline ingot. Additionnally the invention relates to a method of manufacturing a wire saw device according to the preamble claim 13. Such a device and such a method are known from document WO 03/076152 A.

### DESCRIPTION OF THE RELATED ART

Conventional wire sawing devices generally contain a plurality of wires that are moved in a single direction relative to an ingot or piece that is to be sawed. Wire sawing devices are generally used in the electronics industry to saw ingots including ferrites, quartz and silica, to obtain thin slices of material, such as polysilicon or monocrystalline silicon, or even new materials such as GaAs, InP, GGG or else quartz, synthetic sapphire, ceramic materials. The high price of the materials renders wire sawing more attractive compared to other techniques such as diamond disc sawing.

Wire saws are used for cutting blocks or bricks, thin slices, e.g., semiconductor wafers, from a piece of hard material such as silicon. In such devices, a wire is fed from a spool and is both guided and tensioned by wire guide cylinders. The wire that is used for sawing is generally provided with an abrasive material. As one option, the abrasive material can be provided as slurry. This may be done shortly before the wire touches the material to be cut. Thereby, the abrasive is carried to the cutting position by the wire for cutting the material. As another option, the abrasive can be provided on the wire with a coating, e.g. as with diamond wire. For example, diamond particles can be provided on a metal wire with a coating, wherein the diamond particles are embedded in the coating of the wire. Thereby, the abrasive is firmly connected with the wire. Renewal of the wire, as well as control of its tension, takes place in a so-called management region for the wire located beyond the sawing region where the ingots or pieces are cut.

The wire is guided and/or maintained tensioned by wire guides. These wire guides are generally covered with a layer of synthetic resin and are machined with grooves of very precise geometry and size. The wire is wound around the wire guides and forms a web or wire web. During the sawing process, the wire is moved with considerable speed. Usually, the piece to be sawed, e.g. an ingot connected to a support beam or a support holding is urged towards the web. During sawing, the piece to be sawed is moved through the wire web, wherein the speed of this movement determines the cutting speed and/or the effective cutting area that can be sawed within a given amount of time.

Generally, there is a tendency to use thinner wires in order to reduce the thickness of the slices and, thereby, to decrease the material wasted. There is also a desire to use diamond wires. These thinner wires and diamond wires are generally more susceptible to damage and, under high strain, the wires may break more easily. Further, there is a desire to increase the cutting speed for improving the throughput of wire saws. The maximum speed for moving the piece through the web and also the maximum effective cutting area within a given amount of time is limited by several factors including wire speed, feeding speed of the material to be sawed, hardness of the material to be sawed, disturbing influences, desired precision, and the like. When the speed is increased, the strain on the wire is generally increased as well. Hence, the above-mentioned issues of avoiding damage, undue wear, failure or breakage of the wire are even more critical at higher sawing speeds.

It is of utter importance to operate the wire saw in a manner so as to avoid or reduce varying sawing quality, varying sawing width, oscillations of the wire, or even breaking of the wire. In the worst case, a break of the wire occurs, which may result in damage of the wire saw and in many cases in loss of the cut, i.e. the ingot that is presently sawed. However, besides such a failure during operation, the throughput of the machine is critical for cost of ownership. One main aspect to be considered for throughput is the quality in the cut, particularly for the continuous desire of thinner wires and thinner wafers to be cut. For numerous applications, wafers, or slices, are of a very small thickness relative to the cross-section, or diameter, of the ingot. Irregularities, even of several micrometers, are enough to render the slices unusable for certain applications, such as for many solar and semiconductor applications.

Wire sawing techniques have gained favor in the process of forming photovoltaic type substrates. Photovoltaics (PV), or solar cells, are devices which convert sunlight into direct current (DC) electrical power. A typical PV cell includes a p-type silicon wafer, substrate, or sheet particularly less than about 0.185 mm thick with a thin layer of an n-type silicon material disposed on top of the p-type substrate. In general, silicon substrate based solar energy technology follows two main strategies to reduce the costs of solar electricity by use of PV solar cells. One approach is increasing the conversion efficiency of single junction devices (i.e., power output per unit area) and the other is lowering costs associated with manufacturing the solar cells. Since the effective cost reduction due to conversion efficiency is limited by fundamental thermodynamic and physical limits, the amount of possible gain depends on basic technological advances. The other strategy to make commercially viable solar cells lies in reducing the manufacturing costs required to form the solar cells.

In order to meet these challenges, the following solar cell processing requirements generally need to be met: 1) the cost of ownership (CoO) for substrate fabrication equipment needs to be improved (e.g., high system throughput, high machine up-time, inexpensive machines, inexpensive consumable costs), 2) the area processed per process cycle needs to be increased (e.g., reduce processing per Wₚ) and 3) the quality of the formed layers and film stack formation processes needs to be well controlled and be sufficient to produce highly efficient solar cells. Therefore, there is a need to cost effectively form and manufacture thin silicon substrates for solar cell applications.

In light of the above it is desirable to enable cutting of thinner wafers with thinner wire and with a better wafer total-thickness-variation at higher productivity rates. It is an object of embodiments described herein, to provide at least some of these desires or to improve one or more, if not all of these aspects by an improved wire saw device.

### SUMMARY OF THE INVENTION

In light the above, a wire saw device according to claim 1 and a method of manufacturing a wire saw device according to claim 13 are provided. Further aspects, advantages, and features of the present invention are apparent from the dependent claims, the description, and the accompanying drawings.

### BRIEF DESCRIPTION OF THE DRAWINGS

So that the manner in which the above recited features of the present invention can be understood in detail, a more particular description of the invention, briefly summarized above, may be by reference to embodiments. The accompanying drawings relate to embodiments of the invention and are described in the following:
- FIGS. 1A: shows a cross-sectional, schematic view of a wire saw device according to embodiments described herein and having a temperature control shield and bearing box sleeves in the mineral casting frame body;
- FIGS. 1B: shows a cross-sectional, schematic view of a wire saw device according to embodiments described herein, wherein a cross-section through an area including the web is shown;
- FIGS. 2A and 2B: show two perspective views of another wire saw device according to embodiments described herein and having a temperature control shield and bearing box sleeves in the mineral casting frame body;
- FIG. 3: shows a cross-sectional, schematic view of a wire saw device according to embodiments described herein and with an ingot feed system;
- FIG. 4: shows a schematic view of cutting of an ingot, i.e. a workpiece.
- FIG. 5: shows a perspective view of yet another wire saw device according to embodiments described herein and having an ingot feeding system, a temperature control shield and bearing box sleeves in the mineral casting frame body;
- FIG. 6A and 6B: show a perspective views of yet other wire saw devices according to embodiments described herein illustrating an ingot feeding system;
- FIGS. 7 and 8: show schematic views of different arrangements of wire guide cylinders, which can be implemented in embodiments described herein;
- FIG. 9: illustrates graphs comparing damping properties of cast iron frame bodies and mineral casting frame bodies according to embodiments described herein;
- FIG. 10: shows a perspective view of yet another wire saw device according to embodiments described herein and having a temperature control shield and bearing box sleeves in the mineral casting frame body; and
- FIG. 11: shows a flow chart illustrating embodiments of manufacturing a wire saw device.

### DETAILED DESCRIPTION OF EMBODIMENTS

Reference will now be made in detail to the various embodiments of the invention, one or more examples of which are illustrated in the figures. Within the following description of the drawings, the same reference numbers refer to same components. Generally, only the differences with respect to individual embodiments are described. Each example is provided by way of explanation of the invention and is not meant as a limitation of the invention. Further, features illustrated or described as part of one embodiment can be used on or in conjunction with other embodiments to yield yet a further embodiment. It is intended that the description includes such modifications and variations.

As described herein, a wire saw device as understood herein may be a cropper, a squarer, or a wafer cutting wire saw. Yet, typically the wafer cutting wire saw has the most challenges due to the precision required for obtaining the desired yield at high throughput.

In the following description, an "ingot feeding system", or simply "feeding system", may be understood as a system controlling the position of a piece to be sawed, e.g. an ingot. In particular, this may be done by a controller of the ingot feeding system.

Generally, in the present disclosure the process of sawing corresponds to the process of cutting. Hence, the verb "to saw" with all adequate grammatical conjugations is used as having the same meaning as the verb "to cut" with all adequate grammatical conjugations.

In the present disclosure the term "kinematic mechanism structure" is defined as an arrangement of at least two elements, typically connecting at least two bodies, wherein the at least two elements are connected to each other such that at least one of the at least two elements is movable relative to the other element or elements of the at least two elements of the arrangement, e.g. by rotation around an articulation and/or translation along an axis.

In the present disclosure the term "parallel kinematic mechanism structure" is defined as a "kinematic mechanism structure" wherein at least one of the typically at least two bodies is connected to the "parallel kinematic mechanism structure" at two or more different locations. Thereby, a movement of one of the elements of the parallel kinematic mechanism structure typically translates into a movement of at least a part of the kinematic mechanism structure (e.g. another element of the kinematic mechanism structure).

Generally, and not limited to any specific embodiment described herein, the term "cutting plane" includes the cutting direction. Typically, the orientation of the cutting plane remains constant throughout the complete cutting process. Typically, the orientation of the cutting plane corresponds to the orientation of the wires of the wire saw. In the present disclosure the term "cutting direction" is defined as the direction in which the cut advances during the cutting process. Typically, the cutting direction is a vertical direction. Thereby, when references is made to a "cutting plane" or "cutting direction" the terminology is simplified in as much that the wires in the wire web typically bow when the hard material is urged through the wires or the wire web for cutting. Yet, a skilled person should be aware of this and can clearly understand such terms in spite of a potential simplification.

Further, in the present disclosure the term "working area" is defined as the area spanned by the wires of a wire saw, typically a web of wires is also referred to as a layer of wires. Typically the working area is the area in which a single piece to be sawed, typically an ingot, interacts with the wires of a wire saw during cutting.

According to typical embodiments described herein, a wire saw device having a cutting head is provided. The cutting head has a frame body, i.e. a structural frame, made in mineral casting. Bearing box sleeves and temperature control shields, e.g. temperature controlled heat shields, are integrated in the frame body made of mineral casting.

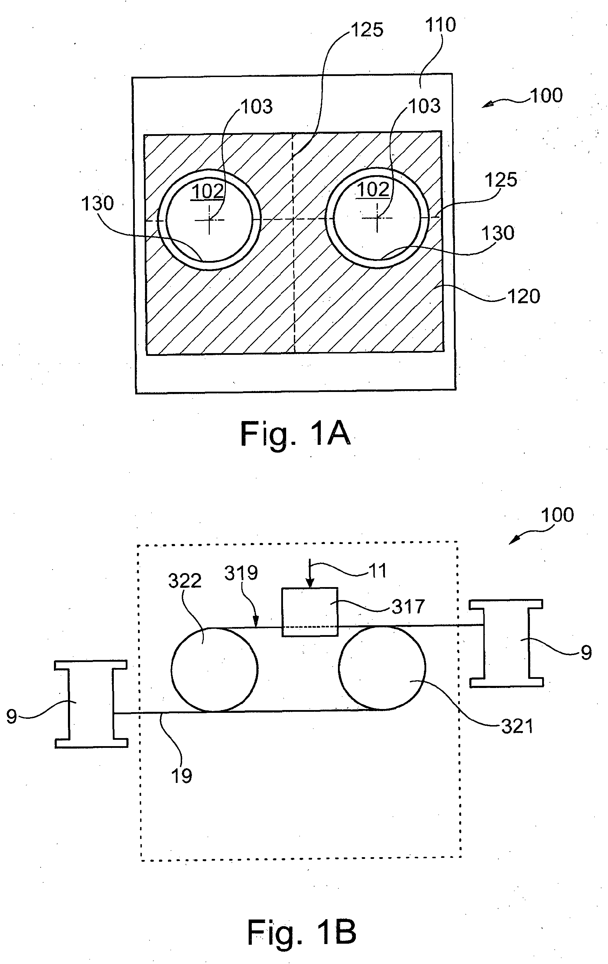

FIGS. 1A and 1B show portions of a wire saw device 100 in two different cross-sections as schematic views. A frame body 110 of the cutting head of the wire saw device is provided. The cross-sectional view of FIG. 1A is such that a portion of the frame body having two openings 102 is shown. The openings provided for rotational axes 103, which are provided for wire guide cylinders extending along the axes 103. At least two further opening are provided in the frame body (not shown in the cross-section of FIG. 1A) for support at further axial positions of the wire guide cylinders. Accordingly, the frame body 110 has at least four openings configured for receiving a set of wire guide cylinders. Two bearing box sleeves 130 are shown in FIG. 1A. Corresponding to the openings further bearing box sleeves are provided corresponding to further axial positions of the wire guide cylinders. Accordingly, at least four bearing box sleeves can be provided according to embodiments described herein. According to some embodiments, the at least four bearing box sleeves can be glued and/or press-fitted in a respective one of the at least four openings. The bearing box sleeves have a ring-like form and can be provided for high precision mounting of the bearing boxes. Together with the mineral casting frame body the bearing box sleeves can be provided to obtain high precision regarding concentricity, parallelism and/or perpendicularity of the wire guide cylinders.

FIG. 1B shows a corresponding cross-section at a different axial positions as compared to FIG. 1A and showing two wire guide cylinders 321, 322. The frame body as shown in FIG. 1A is shown in FIG. 1B with dotted lines only to illustrated that the frame body might have a different shape in the cross-section of FIG. 1B. A wire is wound from a first spool 9 over the wire guide cylinders 321, 322 to a second spool 9. Thereby, a wire web 319 is formed. The wire web typically includes a plurality of wires provided essentially in parallel to each other, wherein the wire is guided in grooves of the wire guide cylinders 321, 322. Between the spools 9 and the wire web, typically between the spools the cutting head typically wire management units are provided. An ingot or another workpiece 317, for example a silicon ingot, is urged through the wire web as indicated by arrow 11 in order to cut the workpiece, for example in thin wafers.

As shown in FIG. 1A and according to embodiments described herein, a temperature control shield arrangement having one or more temperature control shields 120 is provided. The temperature control shield can cover inner portions of the frame body or can be cast into the frame body. As indicated by the dashed lines 125 in FIG. 1A, according to some embodiments, which can be combined with other embodiments described herein, the temperature control shield arrangement can include one or more control shields 120, a segmented temperature control shield or more than one segmented temperature control shields. The segmentation indicted by dashed lines 125 is for example provided in a manner than a portion above one of the axis 103 or below of one of the axis 103 can be heated or cooled independently and/or differently from other portions. Accordingly, potentially occurring temperature non- uniformities can be compensated or reduced. Depending on the typical non-uniformities that can be considered depending on the specific design of the cutting head and/or the application different shapes and numbers of temperature control shields and/or different shapes of segments of a temperature control shield can be provided.

According to embodiments described herein, the frame body is made of mineral casting. Further, the mineral casting frame body is combined with the at least four bearing box sleeves and the one or more temperature control shields. Accordingly, a hybrid-structure of at least the mineral casting frame body, the one or more temperature control shields and the bearing box sleeves can be provided as the cutting head. Thereby, for example, the at least four bearing box sleeves are made of a material selected from the group consisting of: steel, cast iron, ceramic, and carbon fiber reinforced plastic.

According to yet further embodiments, which can be combined with other embodiments described herein, the one or more temperature control shields can be one or more heat shields, particularly one or more plates, which are cooled and heated. For example, the one or more plates can be fluid cooled, particularly water cooled. According to some implementations the one or more temperature control shields can be made of a material selected from the group consisting of: steel, stainless steel, copper, copper alloys, aluminum, aluminum alloys, plastics, and ceramics.

As described above, the bearing boxes bores can be made of steel or other materials described herein and can be glued into the mineral casting. For the mineral casting frame body, i.e. wherein the hybrid structure is formed, this can be conducted at high precision regarding concentricity, parallelism and/or perpendicularity. According to yet further implementations, the one or more heat shields can be made of water cooled/heated plates, e.g. stainless steel plates, which cover the inside of the process chamber (cutting head) or can be cast into the frame body. According to some additional or alternative modifications, at least the conduits can be cast in the frame body.

Providing mineral casting for the frame body of the cutting head allows for enhanced casting flexibility (for example, more complex shapes, inner tubing, and piping. It is possible to implement cooling structures/devices, which can be provided close to the heat generating components, wherein for example, the temperature in the machine structure can be stabilized. The mineral casting production method further allows for higher accuracy and tighter tolerances as compared to regular (metallic) casting materials. For example, a higher positioning accuracy of the bearing boxes bores concentricity can be achieved. Yet further, as an additional or alternative benefit the good dampening properties of the mineral casting, high frequency vibrations induced by the wire web can be reduced. For example, this can almost eliminate the noise level close to the machine.

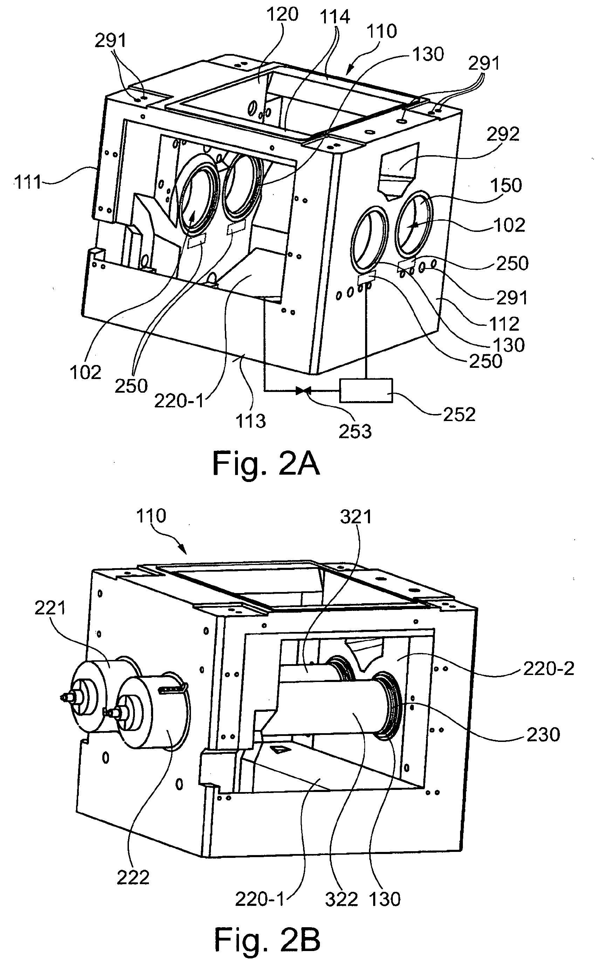

FIGS. 2A and 2B are perspective views of a cutting head having a frame body 110. Thereby, FIG. 2A is shown without wire guide cylinders 321, 322 and some of the corresponding components and FIG. 2B is shown with the wire guide cylinders 321, 322 and some of the corresponding components. Further, different viewing angles are shown in order to more easily explain details and features of some of the embodiments described herein. The frame body 110 can have a front portion 112 and a rear portion 111. The openings 102 are provided in the front portion and the rear portion. The bearing box sleeves 130 are provided in the openings 102, typically by gluing and/or press fitting. The rear portion 111 and the front portion 112 are for example connected to a base portion 113 and are connected by connecting portions 113. The front portion, the rear portion, the base portion and the connecting portions are cast by mineral casting, i.e. are integrally formed. The connecting portions 114 leave an opening, e.g. at the top, in order to feed the ingot towards a processing area provided within the cutting hear.

According to different embodiments, which can be combined with other embodiments described herein, the frame body can have a plurality of openings 291 and cut-outs 292. The cut outs can be provided for easier access to the processing area or similar to the opening at the top between the connecting portions 114 for inserting of other components of the wire saw device. The openings 291 can be provided for connecting the cutting head to other components of the wire saw device, e.g. by bolts, screws or other means and can be used to connect various components to the cutting head. For example, sensors as described in more detail below can be connected, components of a slurry delivering system (if not integrated in the casting) can be connected and/or a ingot feed system can be connected as also described in more detail below.

According to some embodiments, which can be combined with other embodiments described herein, the cutting head or the frame body 110 can be equipped with temperature sensors: The temperature sensors may, for example, be provided at various positions of the cutting head or the frame body 110, respectively. The temperature sensor can measure the temperature at the various positions and can be connected via a controller to the temperature control shields. In FIG. 2A temperature control shields 120 and 220-1 are shown. In FIG. 2B, i.e. with a different viewing angle, temperature control shields 220-1 and 220-2 are shown. Accordingly, one or more temperature sensors can be adapted control and stabilize the temperature of the frame body. Overall temperature variations of the structural frame can be compensated for or reduced. For example, the temperature control and stabilization is done by varying the flow and temperature of the water to and from the temperature control shields, e.g. heat shields.

According to yet further embodiments, which can be combined with other embodiments described herein, further sensors to be provided, can be vibrational sensors. Even though the damping properties of mineral casting are one exemplary benefit of some of the embodiments, monitoring of system vibrations can beneficially be used to monitor the system condition and, e.g. to control the operation of the wire saw device.

FIG. 2B shows the wire guide cylinders 321 and 322 which are provided in the cutting head. Inside the bearing box sleeves 130, the bearing boxes 230 are provided, which support the wire guide cylinders such that they can be rotated around their axes. The drives 221 and 222 rotate the wire guide cylinders.

According to different embodiments, which can be combined with other embodiments, described herein, the temperature control shields 120, 220-1 and 220-2 can be provided inside the frame body 110 or can be cast into the frame body 110.

According to embodiments described herein, which can be combined with other embodiments described herein, at least one temperature sensor for measuring the temperature of the frame body, wherein the at least one temperature sensor is connected to a controller, wherein the controller controls the one or more temperature control shields, particularly to provide a closed loop control together with the at least one temperature sensor. In FIG. 2A temperature sensors 250 are shown. Typically, these sensors can be cast into the frame body, as indicated by the dotted lines. Alternatively, one or more of the sensors can be provided at the surface of the frame body.

In FIG. 2A exemplarily one of the sensors 250 is connected to the controller 252. It is to be understood that all of the temperature sensors can be connected to a controller, wherein some or all sensors can also be connected to a common controller, e.g. in order to more easily correlate the temperature measurement results of several temperature sensors.

As one example of a closed loop control, the controller 252 controls the valve 253 in FIG. 2A such that the flow of cooling fluid to the temperature control shield 220-1 is controlled. Accordingly, the temperature sensor 250, the controller 252, the valve 253 and at least one of the temperature control shields form a closed loop. According to yet further embodiments, one or more valves can be controlled by a controller. According to some embodiments, which can be combined with other embodiments described herein, the controller can be configured to vary the flow and/or temperature of the fluid.

In light of the above, a method of operating a wire saw device can include: measuring the temperature of a region of a mineral casting frame body, particularly of a wire saw device according to embodiments described herein; and varying the flow and/or the temperature of a temperature control fluid in a temperature control shield provided in or at the frame body of the cutting head in dependence of the measured temperature. It is further possible that according to one optional modification, vibrations are measured and at least one operation condition is varied in dependence of the measured vibrations.

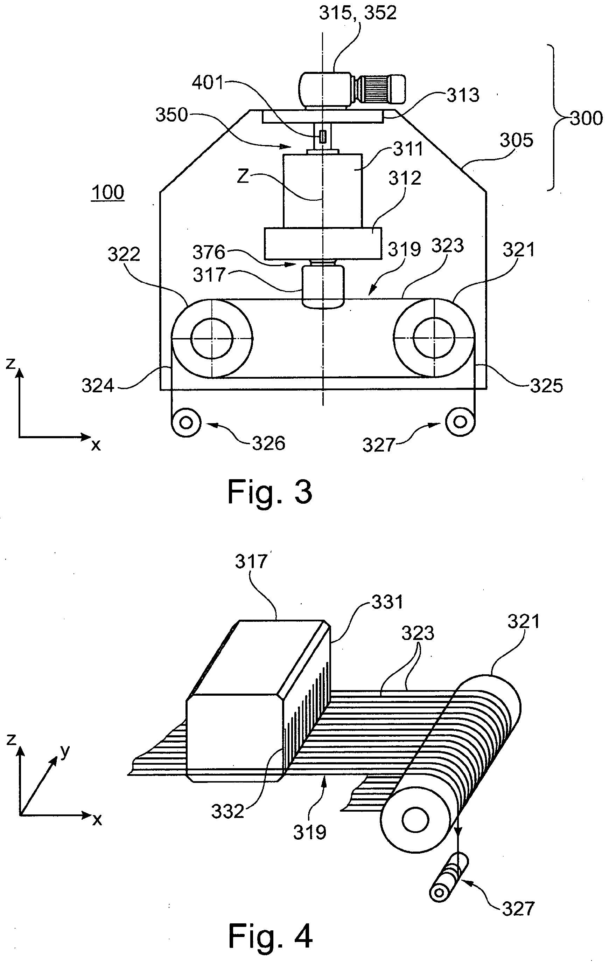

In Fig. 3 a schematic side view of an embodiment of a wire saw device 100 including an ingot feeding system 300 including a linear kinematic mechanism structure is illustrated. Typically, the wire saw device includes a wire guide with wire guide cylinders 321, 322 for transporting and guiding the wire 324, 325 in a wire moving direction. The wire 323 may be wound on the wire guides, herein referred to also as guide cylinders. Normally, the guide cylinders are grooved with a constant pitch, forming a horizontal net of parallel wires or wire web, herein referred to also as a layer of wires 319. The wire guides are rotated by drives that cause the entire wire-web to move at a relatively high speed of, for instance, 5 m/s or more, e.g. 10 to 30 m/s..

If desired, several nozzles, e.g., high flow-rate nozzles, may feed the moving wires with slurry. A slurry as understood herein refers to a liquid carrier with typically suspended abrasion particles (e.g., particles of silicon carbide). As mentioned, during the cutting action, the ingot may be pushed or urged through the wire web. Alternatively, the ingot may be stationary while the wire web is pushed through it. A wire feed spool typically provides the required new wire and a wire take-up spool typically stores the used wire.

Generally, embodiments of the wire saw device as described herein include a frame 305 of the ingot feed system, which can be connected, for example, to the frame body 110 of FIGS. 1A to 2B, on which the wire guide cylinders 321, 322 are mounted with their rotational axes disposed parallel to each other. Further, typically an actuator assembly 315, 352 is used to urge an ingot 317 against the layer 319 of wires 323.

As illustrated in Fig. 3, the wire 323 is received from a supply spool 326 and then wound about the wire guides, e.g. wire guide cylinders 321, 322, to form at least one layer 319 of parallel wires in the sawing region, i.e. the wire web. The wire 323 is then returned to a suitable receiving device, such as a take-up spool 327. Typically, at least one of the guide cylinders are coupled to a drive motor that is adapted to move the wire(s) 323 disposed in the sawing region 318 in a single direction, or, in particular, in a reciprocating motion. The wire guides may be supported by one or more bearings. The wire can be coupled to a wire tensioning system (not shown) that is adapted to provide a desired tension to the wire(s) 323 by moving one guide cylinder relative to the other. Typically, a wire saw control system may provide control of the wire tension.

In the embodiment as shown in Fig. 3, only a single ingot 317 is positioned and sawed at a time within a wire saw device 100. However, the embodiments of a single wire saw device described herein may form part of a wire saw system including a plurality of wire saw devices. Typically, one, two, three or four ingots are cut at the same time in one or more working areas.

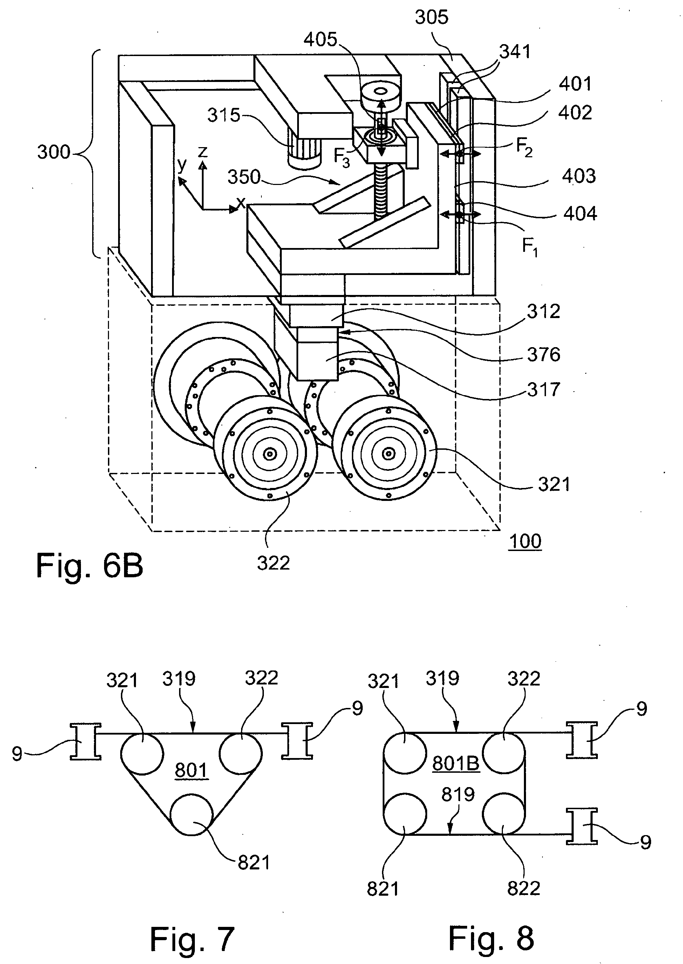

The wire path, from loop to loop, slices one or more ingots at a working area, and is transported by the guide cylinders to further working areas, or the same working area again. Typically, the wire web slices one or more ingots at an upper working area, is then transported to the lower working area, and slices one or more ingots at the lower working area. A typical embodiment with two working areas is shown in FIG. 8. Hereafter, the wire is normally transported back to the upper working area. In the event that the movement direction is changed during sawing, instead of being transported to the next working area, the wire might be transported back to the working area from which it arrives.

It should be understood that a wire web may contain more than one working area which is defined as an area in which a sawing process is performed. Thus, according to typical embodiments described herein, a wire web can have multiple working areas that are formed by one or several wires. For instance, according to typical embodiments described herein, the wire saw may include two horizontally oriented wire webs, for instance, including two or four horizontally oriented working areas. In this case, sawing is performed by pushing an ingot in a typically vertical direction, through the wire web defining the working area (see Fig. 4).

Fig. 4 shows a perspective view of an ingot 317 that is partially sawed due to a movement of the feeding system 300 urging the ingot 317 against the layer 319 of wire(s) 323 disposed in the sawing region of the wire saw device 100. Typically, the pitch between adjacent wires of the layer 319 of wires 323 is defined by engraved grooves on the periphery of the wire guide cylinders which determines the thickness of the sawed slices 331. The latter are separated from each other by slots or sawing gaps 332. Typically, the wire 323 may include a spring steel wire with a diameter between 0.08 and 0.2 mm so as to saw ingots of hard material, or more particularly compositions, such as silicon, ceramic, compounds of the elements of groups III-V and II-VI, GGG (gadolinium gallium garnet), sapphire, etc., in slices of desirably about 300 µm or less, or typically for next generation substrates 180 µm or less in thickness. Typically an abrasive agent is used, which generally is a product, such as diamond, silicon carbide, alumina, or other useful material that is used to improve the ingot sawing process. The abrasive agent may be fixed to the wires 323, or be in a free form that is in suspension in a liquid (e.g., PEG), such as a slurry, which serves as a transport for the abrasive particles.

It is possible that sawing is undertaken at the same time at the upper working area and the lower working area. The wire saw may furthermore include two vertically arranged webs (not shown). According to some embodiments, the vertically arranged webs are used for transporting the wire between the horizontally oriented working areas. During transport between the working areas the wire can cool down. According to other embodiments, the working areas are oriented vertically.

According to embodiments described herein, the wire saw is used for cutting hard material such as semiconductor material, for example, silicon, quartz, or the like at high speed. The wire speed, that is the speed of the wire moving through the wire saw can be, for example, 10 m/s or even higher. Typically, the wire speed can be in a range of 10 to 15 m/s. However, higher wire speeds, such as of 20 m/s, 25 m/s or 30 m/s can also be desirable. According to some embodiments, the movement of the wire is only unidirectional, i.e., always in the forward direction. According to other embodiments, the movement may include a movement in the backward direction, in particular, the movement can be a back-and-forth movement of the wire in which the movement direction of the wire is amended repeatedly.

For unwinding the wire at the desired wire speed, the feed spool 326 with unused wire rotates with a rotation speed of up to several thousands rotations per minute. For example, 1000 to 2500 rpm can be provided for unwinding the wire.

In embodiments, which can be combined with other embodiments described herein, the wires may have different diameters depending on the type of device. In an embodiment pertaining to a squarer, the wire diameter may be from about 250 µm to about 450 µm, e.g., 300 µm to 350 µm. In an embodiment pertaining to a wafer cutting wire saw, the wire diameter may be from 80 µm to 180 µm, more typically from 100 µm to 140 µm.

According to a further embodiment, which can be combined with other embodiments described herein, the wire employed for cutting is a diamond wire. By using diamond wire, the throughput may be increased by a factor of 2 or even more in comparison to conventional steel wire with slurry as an abrasive. The speed with which the material to be sawed is moved relatively to the moving wire may be referred to as the material feed rate. The material feed rate in the embodiments described herein may be in the range of 2 µm/s to 20 µm/s, typically about 6 µm/s to 10 µm/s for a wafer cutting wire saw, respectively from 10 µm/s to 50 µm/s, typically from 28 µm/s to 36 µm/s for embodiments pertaining to a squarer. Alternatively, the material feed rate in the embodiments described herein may be above 20 µm/s for a wafer cutting wire saw, respectively above 50 µm/s for embodiments pertaining to a squarer.

Normally, after traveling through the entire wire saw, the wire exits the operation area of the wire saw at a diameter reduced in comparison to its initial diameter before the sawing process. The wear in wire is process dependent. In particular, the higher the cut rate, the higher the resulting temperature, the higher the wire wear. Additionally, the wire is heated inside the ingots where the abrasion takes place during sawing, that is, typically inside the wafers. Thus, the wire heats up while cutting the ingot. Outside the ingot, the wire cools down by exchanging heat with its surroundings such as the slurry, air, and the guide cylinders or further wire guides. Consequently, as the diameter of the cutting wire and thus its mechanical properties change during the cutting process as a function of time and temperature, the cutting force acting on the ingot by the wire and therefor the abrasion property of the wire changes during the cutting process resulting in undesirable inhomogeneous cutting surfaces of the ingot.

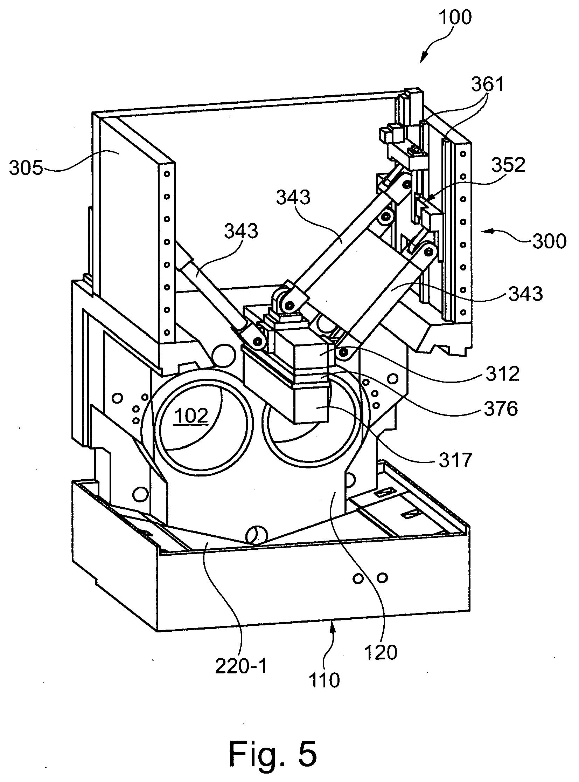

Fig. 5 shows a perspective view of a portion of wire saw device 100. The frame structure 110 is provided and an ingot feeding system 300 is mounted thereto. The feeding system 300 can include a parallel kinematic mechanism structure, at three arms 343 having first ends and second ends, and two or more actuators 352. The first ends of the arms can be rotatably connected to the support table 312, e.g. via a hinged joint, whereas the second ends of the arms are rotatably connected to the actuators 352, e.g. via a hinged joint. According to embodiments not shown, the parallel kinematic mechanism structure may include four arms, wherein two arms are arranged on a left side of the support table and the other two arms are arranged on the right side of the support table.

The workpiece 317 is mounted via the mounting plate 312 to the support table 312. One of the arms shown in FIG. 5 is mounted at the left side of the support table and one of the arms 343, e.g. the arm having an increased width in FIG. 5, is mounted on the right side of the support table. A further arm 343 is mounted at an upper or top portion of the support table 312.

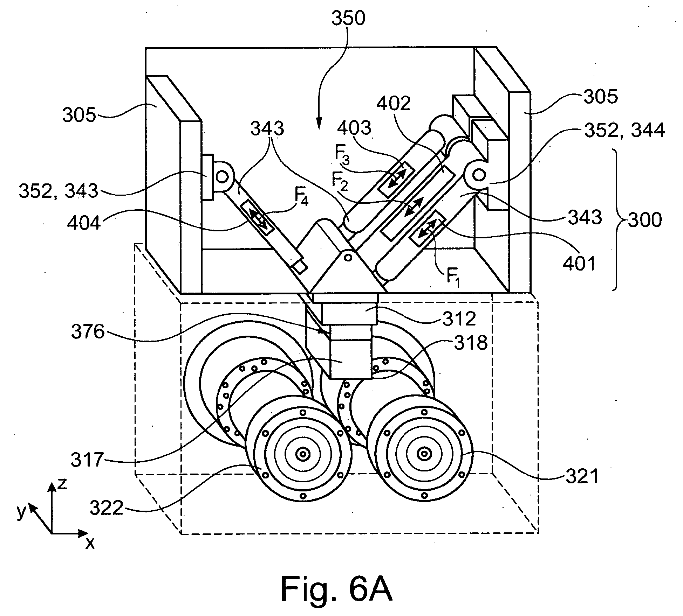

Typically the actuators are configured to realize a movement along a translational axis, typically a vertical axis. Typically, the actuators are guided via guide rails 361 provided on the frame 305 of the wire saw's ingot feed system 300. The guide rails are typically arranged along an axis of the cutting direction, particularly in a vertical direction. Further, the actuators are configured such that each can move separately. Hence, by moving the actuators 352, the arms 343, the support table 312 and thus the ingot 317 connected to the support table can be moved, e.g. by the mounting plate 376. Further details of the movement of the ingot feed system is described with respect to FIG. 6A.

In FIG. 5 and according to some embodiments described herein, which can be combined with other embodiments described herein, the frame 305 of the ingot feed system is mounted to the frame body 110 of the cutting head. Alternatively, the frame 305 of the ingot feed system and the frame body can be integrally formed.

According to some embodiments, which can be combined with other embodiments described herein, also the frame 305 of the ingot feed system can be made of mineral casting. Thereby, the benefits of mineral casting with respect to precision, damping properties and/or flexible manufacturing can also be provided for the ingot feed system. This is irrespective of the alternatives where the frame 305 and the frame body 110 are integrally formed or mounted together.

Accordingly, mineral casting can be used for one or more structural parts of a wire saw. The ingot feeding system (sometimes referred to as upper cutting head) can additionally include a structural frame 305 made of mineral casting. Yet, according to some embodiments the ingot feed system frame 305 may be made of cast iron. Particularly for an ingot feed system frame made of mineral casting, bit to some extend also for cast iron frames, the frame of the ingot feed system can be provided with integrated water cooling/heating circuits for temperature control and stabilization. The frame 305 and/or the circuits and pipes can be coupled with the cutting head structural frame.

The temperature control and stabilization of the structural parts allow avoiding thermal dilatation during the cut at various process steps with more or less heat generation. Furthermore, a temperature stabilized structure needs no warm-up time before a cut. Thus, the non-productive time of the wire saw device can be reduced to a minimum.

According to various embodiments, the ingot feeding system can include a straight ingot feeding (see, e.g. FIG. 3) with or without a rocking table or a feeding system with parallel kinematic (see, e.g., FIGS. 5 and 6).

FIG. 6A shows a perspective view of a wire saw device 100 including a further embodiment of the ingot feeding system 300. As exemplarily shown in FIG. 6A, the feeding system 300 includes a parallel kinematic mechanism structure 350, at three arms 343 having first ends and second ends, and two or more actuators 352. As illustrated in FIG. 6A, the first ends of the arms are rotatably connected to the support table 312, e.g. via a hinged joint, whereas the second ends of the arms are rotatably connected to the actuators 352, e.g. via a hinged joint. According to embodiments not shown, the parallel kinematic mechanism structure may include up to four arms, wherein two arms are arranged on a left side of the support table and the other two arms are arranged on the right side of the support table.

Typically the actuators are configured to realize a movement along a translational axis, typically a vertical axis. Typically, the actuators are guided via guide rails (see 361 in FIG. 5) provided on the frame 305 of the wire saw's ingot feed system, wherein the guide rails are typically arranged along an axis of the cutting direction, particularly in a vertical direction. The actuators can also be arranged in another direction, e.g. perpendicular to the feeding direction. Further, the actuators are configured such that each can move separately. Hence, by moving the actuators 352, the arms 343, the support table 312 and thus the ingot 317 connected to the support table can be moved, e.g. by the mounting plate 376.

For example, when all three actuators are moving in the same direction with the same speed the ingot is urged downwards in the representation of FIG. 6A, in particular towards the wires of the wire saw, typically along an axis of the cutting direction. In the case that at least one of the actuators is moving at a different speed and/ or in a different direction compared to the other actuators, a rotational movement of the ingot can be realized. Accordingly, a relative motion of the actuators to each other and to the rails can be used to move the ingot 317 in a cutting plane, for example in the z-x-plane of FIG. 6A, and/or also to provide a tilt of the ingot 317, e.g. with an angle relative to the layer of wires 323.

Furthermore, as shown in FIG. 6A, the supporting table typically includes a prism-like part, wherein a rectangular surface of the prism-like part forms a base portion, which typically includes the mounting plate 376 and a tip portion located opposite to the base portion. Typically, one of the three arms 343 is rotatably connected to the tip portion of the prism-like part, wherein the other two arms are rotatably connected to the base portion of the prism-like part, in particular on opposite sides of the base portion, as illustrated in FIG. 6A. Typically, one of the two arms rotatably connected to the base portion of the prism-like part has a larger width as compared to the other arm. Thereby, the width is defined by the direction of the rotation axis of the rotatable connection. Accordingly, a higher stiffness of the kinematic mechanism structure can be realized.

Further, similar to other embodiments of the feeding system described herein, the embodiment of the feeding system as illustrated in FIG. 6A includes sensors 401, 402, 403, 404 for measuring a force acting on the kinematic mechanism structure during cutting wafers. Typically, part of the sensors, such as the sensors 401 and 402 depicted in FIG. 6A, can be provided on each arm 343 of the parallel kinematic mechanism structure. Alternatively, the sensors 401, 402, 403, 404 are configured and arranged such that a force transmitted into the arms 343 can be measured, as exemplarily illustrated by F1, F2 and F3. In an embodiment as shown in FIG. 6A, in which one of the two arms rotatably connected to the base portion of the prism-like part has a larger width as compared to the other arm. Thereby, the width is defined by the direction of the rotation axis of the rotatable connection. The arm having the larger width typically includes two or more sensors. Although not specifically shown in FIG. 6A, the sensors may be arranged on other positions of the kinematic mechanism structure which are suitable for measuring vertical and horizontal force components of a force acting on the kinematic mechanism structure during wafer cutting. For example, force sensors may be provided on the support table 312 and/ or the mounting plate 376, and/or vertical slides.

Fig. 6B shows a perspective view of a wire saw device including an ingot feeding system, which can be utilized in wire saw devices according to embodiments described herein. As exemplarily shown in Fig. 6B, the feeding system 300 includes a linear kinematic mechanism structure 350, a motor 315 acting as actuator for creation of a linear motion via the kinematic mechanism structure 350, and multiple sensors 401, 402. 403, 404, 405 for measuring a force acting on the kinematic mechanism structure. Typically, the force acting on the kinematic mechanism structure results from a transmission of a force acting on an ingot 317 into the kinematic mechanism structure during cutting. The ingot is coupled to the kinematic mechanism structure 350 by mounting the ingot on a support table 312 by means of a temporary support, such as the mounting plate 376.

As shown in Fig. 6B the linear kinematic mechanism structure 350 is based on a screw principle. In particular the motor 315 is arranged such that a screw shaft of the kinematic mechanism structure can be driven. As exemplarily shown in Fig. 6B the screw shaft engages with a corresponding nut which is connected to a further element of the kinematic mechanism structure, wherein the further element is arranged such that it can move in a linear direction. Typically, as depicted in Fig. 6B, the further element is configured as an elbow element. The elbow element is connected to the frame of the wire saw such that a translational movement, typically along the axis of the cutting direction can be realized, typically a vertical movement. Typically, the connection between the elbow element and the frame is realized by using a slide mechanism.

Generally guide rails may be attached to the frame 305 of the wire saw and corresponding slide elements (not shown) attached to the further element of the kinematic mechanism structure, e.g. the elbow element. The frame of the wire saw and/or of the ingot feedings system is made of mineral casting according to any of the embodiments described herein. Guide rails are typically employed for realizing a guided movement of the kinematic mechanism structure along the axis of the cutting direction. Typically, at least two guide rails and at least two slide elements, typically four slide elements, are used. As exemplarily shown in Fig. 6B, typically the guide rails are arranged parallel in cutting direction. Typically, the screw shaft and the slide elements are provided with sensors 401, 402, 403, 404, 405 for measuring a force, in particular the force components of a force, acting on the kinematic mechanism structure. Typically, part of the sensors provided on the slide elements are arranged and configured for measuring a horizontal force component, exemplarily illustrated by F₁ and F₂, of the force acting on the kinematic mechanism structure during cutting. Correspondingly, typically at least one sensor, such as the sensor 405 illustrated in Fig. 6B, arranged and configured for measuring a vertical force component of the force, exemplarily illustrated by F₃, acting on the kinematic mechanism structure during cutting. According to the embodiment as shown in Fig. 6B the sensor for measuring a vertical force is provided on the screw shaft. Although, not specifically shown in Fig. 6B the sensors may be arranged on other positions of the kinematic mechanism structure which are suitable for measuring vertical and horizontal force components of a force acting on the kinematic mechanism structure during cutting. For example, forces sensors may be provided on the support table 312 and/ or the mounting plate 376 and/ or the guide rails.

According to different alternatives, the cutting head can include 2, 3 or 4 wire guides in order to adapt to different ingot sizes (diameter or square shape). This can be more easily understood with respect to FIGS. 7 and 8. FIG. 7 illustrates an embodiment with three wire guide cylinders 321, 322 and 821. The wire is feed from a spool 9 to a spool 9 and thereby generates the wire web 319. In light of the fact that the wire moving direction can be in any of the two directions from one spool to the other spool or even back and forth, the two spools are not indicated as being specific with respect to their properties of proving the wire to the wire web, i.e. the cutting area, or receiving the wire from the wire web. As can be seen in FIG. 7 the space 801 provided below the wire web 319 is enlarged by the third wire guide cylinder 821 as compared to a wire web formed by two wire guide cylinders 321 and 322 only. Accordingly, larger ingot sizes can be sawed.

FIG. 8 shows an embodiment with four wire guide cylinders 321, 322, 821 and 822. The wire is feed from a spool 9 to a spool 9 and thereby generates the wire web 319. The space 801B provided below the upper wire web 319 is enlarged by the third and fourth wire guide cylinders 821 and 822 as compared to a wire web formed by two wire guide cylinders 321 and 322 only and typically also as compared to a wire web formed by three wire guide cylinders. Accordingly, larger ingot sizes can be sawed. Yet, further, a further wire web 819 is provided between the wire guide cylinder 821 and the wire guide cylinder 822. Thereby, a further working area can be provided. Accordingly, ingots or workpieces can be sawed at the upper wire web 319 and at the lower wire web 819.

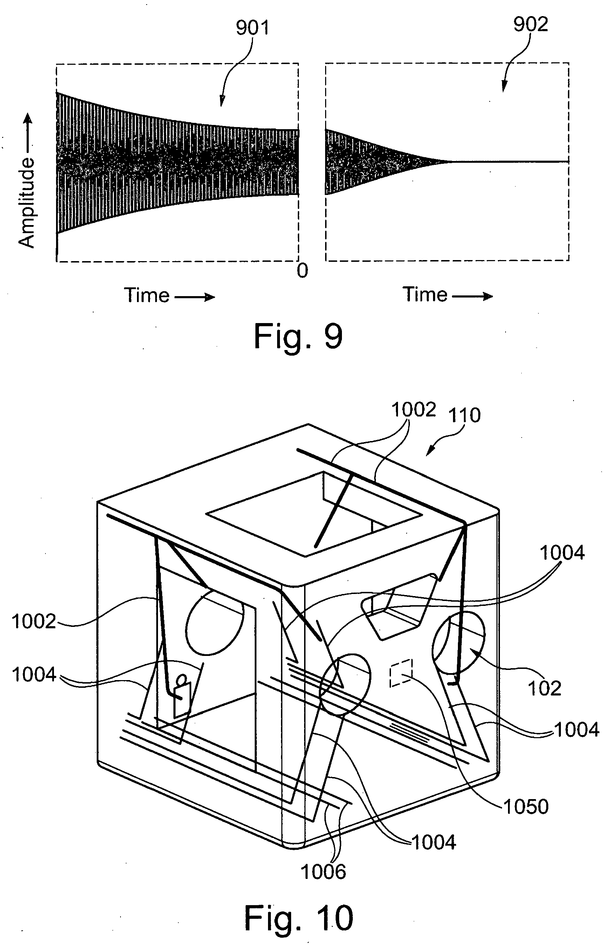

As described above, one of the positive effects of providing structural parts of the wire saw device, particularly the frame body of the cutting head, by a mineral casting frame body are the improved damping properties of cast iron. FIG. 9 shows a first graph 901 for cast iron and a second graph 902 for mineral casting where vibrational amplitude of a few micrometers are shown as a function time in order to illustrate the damping of the frame body. Both graphs show the same amplitude scale and the same time scale. It can be seen that the damping of the mineral casting curve 902 results in a significantly faster reduction of the vibration amplitude than the damping of the cast iron curve 901. The reduced vibrational levels result in better precision of the cut and, thus, in an improved yield of the wire saw device, because e.g. the tolerances for the sawed wafers can be more easily achieved due to the reduced vibration.

According to embodiments described herein, one or more of the benefits of using mineral casting material can be provided as follows: the cutting process can be improved due to control of the vibration level in the machine structure and the wire web. This can be achieved by utilizing the dampening properties of the mineral casting in order to reduce vibration level in the machine structural parts, like the frame body and the frame of the feeding system and/or by utilizing vibration monitoring. For example the wire saw device can include vibration sensors in the machine frame. FIG. 10 shows a frame body 110 in which a vibration sensor 1050 is shown. This sensor can be provided at the frame body 110 or can be cast into the frame body 110. According to some embodiments, which can be combined with other embodiments described herein, one or more vibration sensors configured to monitor the vibrations of the frame body can be provided.

FIG. 10 shows yet further elements that can be included the mineral casting frame body. One or more of these elements can be included according to various embodiments, which can be combined with other embodiments described herein. For example, various air ducts 1002 can be provided. Additionally or alternatively tubes 1006 for wire harnesses can be provided in the frame body. The wire harnesses can be used to connect sensors, valves (e.g. for the slurry delivery system), or other components to a controller. Yet further additionally or alternatively water piles 104 can be provided for providing water to the temperature control shields. These water pipes can particularly guide water to regions close to the bearings, where access heat can be generated during operation of the wire saw device. According to some embodiments, which can be combined with other embodiments described herein, at least one element selected from the group consisting of: a plate, a fluid piping, an electrical connector, a wire harness tube, and air duct, and a sensor is cast into the frame body.

Accordingly, embodiments can use the enhanced casting flexibility (for example, more complex shapes and inner tubing and/or piping) of mineral casting. Some embodiments, implement cooling structures and/or cooling devices close to heat generating components (e.g. the bearings) and stabilize the temperature in the inachine structure.

Yet further, some embodiments can use the mineral casting production method with higher accuracy and tighter tolerances as compared to regular (metallic) casting material. For example, a higher positioning accuracy of the bearing boxes bores concentricity could be achieved.

Yet further, some embodiments can use the good dampening properties of the mineral casting, wherein high frequency vibrations induced by the wire web can be reduced. Also, the noise level close to the machine can be almost eliminated.

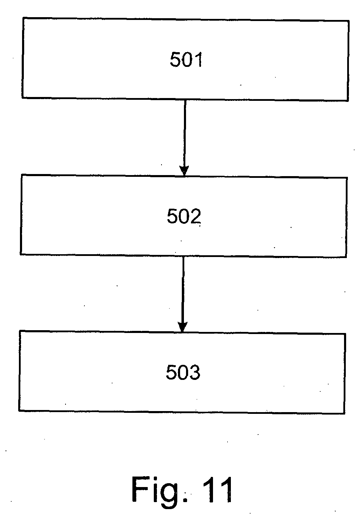

FIG. 11 shows a flow chart illustrating an embodiment of a method of manufacturing a wire saw device. In step 501, a temperature control shield arrangement is provided in a mold. A frame body of a cutting head having and at least four openings in the mold is casted in step 502, wherein the casting is conducted with a mineral filler and a binder. In step 503 at least four bearing box sleeves provided in the in the respective four openings. According to different embodiments, the bearing box sleeves are glued, are press-fitted, or are clued and press-fitted. According to yet further optional implementations, at least one element selected from the group consisting of: a plate, a fluid piping, an electrical connector, and a sensor, can be arranged in the mold before casting the frame body.

Embodiments described herein related to structural parts of a wire saw device manufactured by mineral casting. Particularly, the frame body of the cutting head, the frame of the ingot feed system or the frame body of an integral component of the cutting head and the ingot feeding system (upper cutting head) can be provided by mineral casting. Typically, one or more structural frames can be provided by mineral casting according to embodiments described herein. Thereby, for example a hybrid-structure can be provided in combination with one or more temperature control shields and bearing box sleeves.

According to embodiments described herein, the wire saw device includes a cutting head having a frame body made of mineral casting and having bearing box sleeves and temperature control shields. According to different implementations, there can e.g. be four openings in the frame body. Thereby, an embodiment configured for two wire guide cylinders is provided. Alternatively, there can be six openings in the frame body. Thereby, an embodiment configured for three wire guide cylinders is provided. Yet further, there can be eight openings in the frame body. Thereby, an embodiment configured for four wire guide cylinders is provided. According to embodiments described herein, such frame bodies can be equipped with ingot feeding systems having a frame. The frame of the ingot feeding system and the frame body of the cutting head can be separate or they can be integrally formed. Particularly for embodiments, where the frame of the ingot feeding system is separate, one of the embodiments of the cutting head implementation can be combined with one of the embodiments of the ingot feeding systems as disclosed herein. Different ingot feeding systems are for example described in more detail with respect to FIGS. 3, 5, 6A and 6B. Thereby, by providing the option of various combinations, a modularity for manufacturing different wire saw devices based upon common components can be provided. Thereby, as a further implementation in addition to or alternatively to the variation of the number of wire guide cylinders, also cutting heads and/or ingot feeding systems with different length of wire guide cylinders can be provided.

While the foregoing is directed to embodiments of the invention, other and further embodiments of the invention may be devised without departing from the basic scope thereof, and the scope thereof is determined by the claims that follow.

## Claims

1. A wire saw device (100) comprising:
a cutting head having a frame body (110) and at least four openings (102) configured for receiving a set of wire guide cylinders (321, 322) and
at least four bearing box sleeve (130),
wherein each one of the at least four bearing box sleeves (130) is provided in a respective one of the at least four openings (120), **characterised by** further comprising
a temperature control shield arrangement having one or more temperature control shields (120),
wherein the frame body is made of mineral casting and is combined with the at least four bearing box sleevles (130) and the one or more temperature control shields (120).

2. The device according to claim 1, wherein the at least four bearing box sleeves are made of a material selected from the group consisting of: steel, cast iron, ceramic, and carbon fiber reinforced plastic.

3. The device according to any of claims 1 to 2, wherein each one of the at least four bearing box sleeves is glued and/or press-fitted in a respective one of the at least four openings.

4. The device according to any of claims 1 to 3, wherein the one or more temperature control shields are one or more heat shields, particularly one or more plates, which are cooled and/or heated.

5. The device according to claim 4, wherein the one or more plates are fluid cooled, particularly water cooled.

6. The device according to any of claims 1 to 5, wherein the one or more temperature control shields are made of a material selected from the group consisting of: steel, stainless steel, copper, copper alloys, aluminum, aluminum alloys, plastics, and ceramics.

7. The device according to any of claims 1 to 6, wherein the one or more temperature control shields cover inner portions of the frame body or are cast into the frame body.

8. The device according to any of claims 1 to 7, further comprising:
at least one temperature sensor for measuring the temperature of the frame body, wherein the at least one temperature sensor is connected to a controller, wherein the controller controls the one or more temperature control shields, particularly to provide a closed loop control together with the at least one temperature sensor.

9. The device according to claim 8, when directly or indirectly dependent on claim 5, wherein the controller is configured to vary the flow and/or temperature of the fluid.

10. The device according to any of claims 1 to 9, further comprising:
an ingot feed system having a structural body, wherein the structural body of the ingot feed system is made of mineral casting, steel or cast iron.

11. The device according to any of claims 1 to 10, further comprising:
one or more vibration sensors configured to monitor the vibrations of the frame body, particularly in the bearing box sleeve area.

12. The device according to any of claims 1 to 11, wherein at least one element selected from the group consisting of: a plate, a fluid piping, an electrical connector, a wire harness tube, and air duct, and a sensor is cast into the frame body.

13. A method of manufacturing a wire saw device (100), **characterised by** comprising:
providing a temperature control shield arrangement in a mold;
casting a frame body (110) of a cutting head having at least four openings (102) in the mold, wherein the casting material is composed of a mineral filler and a binder; and
gluing and/or press-fitting at least four bearing box sleeves (130) in the respective at least four openings.

14. The method of claim 13, further comprising:
providing at least one element selected from the group consisting of: a plate, a fluid piping, an electrical connector, and a sensor, in the mold before casting the frame body.

15. The method of any of claims 13 to 14, further comprising:
mounting bearing boxes for wire guide cylinders and wire guide cylinders to be supported by the bearing box sleeves.

## Patentansprüche

1. Drahtsägenvorrichtung (100), Folgendes aufweisend:
einen Schneidkopf mit einem Rahmenkörper (110) und mindestens vier Öffnungen (102), die konfiguriert sind, einen Satz Drahtführungszylinder (321, 322) aufzunehmen, und
mindestens vier Lagergehäusehülsen (130),
wobei jede der mindestens vier Lagergehäusehülsen (130) in einer jeweiligen der mindestens vier Öffnungen (102) vorgesehen ist,
**dadurch gekennzeichnet, dass** die Drahtsägenvorrichtung ferner aufweist:
eine Temperaturregelungsabschirmungsanordnung mit einer oder mehreren Temperaturregelungsabschirmung/en (120),
wobei der Rahmenkörper aus Mineralguss hergestellt ist und mit den mindestens vier Lagergehäusehülsen (130) und der einen oder den mehreren Temperaturregelungsabschirmung/en (120) kombiniert ist.

2. Vorrichtung nach Anspruch 1, wobei die mindestens vier Lagergehäusehülsen aus einem Material hergestellt sind, das aus der Gruppe ausgewählt ist, bestehend aus: Stahl, Gusseisen, Keramik und kohlenstofffaserverstärktem Kunststoff.

3. Vorrichtung nach einem der Ansprüche 1 bis 2, wobei jede der mindestens vier Lagergehäusehülsen in eine jeweilige der mindestens vier Öffnungen eingeklebt und/oder eingepresst ist.

4. Vorrichtung nach einem der Ansprüche 1 bis 3, wobei die eine oder die mehreren Temperaturregelungsabschirmung/en ein oder mehrere Hitzeschild/er sind, insbesondere eine oder mehrere Platte/n, die gekühlt und/oder erwärmt werden.

5. Vorrichtung nach Anspruch 4, wobei die eine oder die mehreren Platte/n flüssigkeitsgekühlt, insbesondere wassergekühlt, wird/werden.

6. Vorrichtung nach einem der Ansprüche 1 bis 5, wobei die eine oder die mehreren Temperaturregelungsabschirmung/en aus einem Material hergestellt ist/sind, das aus der Gruppe ausgewählt ist, bestehend aus: Stahl, rostfreiem Stahl, Kupfer, Kupferlegierungen, Aluminium, Aluminiumlegierungen, Kunststoff und Keramik.

7. Vorrichtung nach einem der Ansprüche 1 bis 6, wobei die eine oder die mehreren Temperaturregelungsabschirmung/en Innenabschnitte des Rahmenkörpers abdeckt/abdecken oder in den Rahmenkörper eingegossen ist/sind.

8. Vorrichtung nach einem der Ansprüche 1 bis 7, ferner aufweisend:
mindestens einen Temperatursensor, um die Temperatur des Rahmenkörpers zu messen, wobei der mindestens eine Temperatursensor an eine Steuerung angeschlossen ist, wobei die Steuerung die eine oder die mehreren Temperaturregelungsabschirmung/en steuert, um insbesondere zusammen mit dem mindestens einen Temperatursensor einen geschlossenen Regelkreis bereitzustellen.

9. Vorrichtung nach Anspruch 8, bei direkter oder indirekter Abhängigkeit von Anspruch 5, wobei die Steuerung dazu ausgelegt ist, den Durchfluss und/oder die Temperatur der Flüssigkeit zu verändern.

10. Vorrichtung nach einem der Ansprüche 1 bis 9, ferner aufweisend:
ein Rohblockzufuhrsystem mit einem Strukturkörper, wobei der Strukturkörper des Rohblockzufuhrsystems aus Mineralguss, Stahl oder Gusseisen hergestellt ist.

11. Vorrichtung nach einem der Ansprüche 1 bis 10, ferner aufweisend:
einen oder mehrere Schwingungssensor/en, die dazu ausgelegt sind, die Schwingungen des Rahmenkörpers, insbesondere im Lagergehäusehülsenbereich, zu überwachen.

12. Vorrichtung nach einem der Ansprüche 1 bis 11, wobei mindestens ein Element, ausgewählt aus der Gruppe bestehend aus: einer Platte, einer Flüssigkeitsrohrleitung, einem elektrischen Verbinder, einem Kabelbaumrohr, einem Luftkanal, und einem Sensor, in den Rahmenkörper eingegossen ist.

13. Verfahren zum Herstellen einer Drahtsägenvorrichtung (100), **dadurch gekennzeichnet, dass** das Verfahren umfasst:
Bereitstellen einer Temperaturregelungsabschirmungsanordnung in einer Form;
Gießen eines Rahmenkörpers (110) eines Schneidkopfs mit mindestens vier Öffnungen (102) in die Form, wobei das Gussmaterial einen Mineralfüllstoff und ein Bindemittel umfasst; und
Einkleben und/oder Einpressen von mindestens vier Lagergehäusehülsen (130) in die jeweiligen mindestens vier Öffnungen.

14. Verfahren nach Anspruch 13, ferner umfassend:
Bereitstellen mindestens eines Elements, ausgewählt aus der Gruppe bestehend aus: einer Platte, einer Flüssigkeitsrohrleitung, einem elektrischen Verbinder und einem Sensor, in der Form, bevor der Rahmenkörper gegossen wird.

15. Verfahren nach einem der Ansprüche 13 bis 14, ferner umfassend:
Montieren von Lagergehäusen für Drahtführungszylinder und von Drahtführungszylindern, die von den Lagergehäusehülsen abgestützt werden sollen.

## Revendications

1. Dispositif de sciage par fil (100), comprenant :
une tête de découpe présentant un corps de bâti (110) et au moins quatre ouvertures (102) configurées pour recevoir un jeu de cylindres de guidage de fil (321, 322), et
au moins quatre manchons de boîtier de logement (130), sachant que chacun des au moins quatre manchons de boîtier de logement (130) est disposé dans respectivement une des au moins quatre ouvertures (102),
**caractérisé en ce qu'**il comprend en outre un agencement d'écran de commande de température comportant un ou plusieurs écrans de commande de température (120),
sachant que le corps de bâti est composé de fonte minérale et est combiné avec les au moins quatre manchons de boîtier de logement (130) et l'un ou les plusieurs écrans de commande de température (120).

2. Le dispositif selon la revendication 1, sachant que les au moins quatre manchons de boîtier de logement sont composés d'un matériau sélectionné dans le groupe constitué par : l'acier, la fonte, la céramique, et le plastique renforcé par fibres de carbone.

3. Le dispositif selon l'une quelconque des revendications 1 à 2, sachant que chacun des au moins quatre manchons de boîtier de logement est collé et/ou enfoncé dans respectivement une des au moins quatre ouvertures.

4. Le dispositif selon l'une quelconque des revendications 1 à 3, sachant que l'un ou les plusieurs écrans de commande de température sont un ou plusieurs écrans thermiques, en particulier une ou plusieurs plaques, qui sont refroidies et/ou chauffées.

5. Le dispositif selon la revendication 4, sachant que l'une ou les plusieurs plaques est/sont refroidie/s par fluide, en particulier refroidie/s par eau.

6. Le dispositif selon l'une quelconque des revendications 1 à 5, sachant que l'un ou les plusieurs écrans de commande de température sont composés d'un matériau sélectionné dans le groupe constitué par : l'acier, l'acier inoxydable, le cuivre, les alliages de cuivre, l'aluminium, les alliages d'aluminium, le plastique, et la céramique.

7. Le dispositif selon l'une quelconque des revendications 1 à 6, sachant que l'un ou les plusieurs écrans de commande de température couvrent des portions intérieures du corps de bâti ou sont coulées dans le corps de bâti.

8. Le dispositif selon l'une quelconque des revendications 1 à 7, comprenant en outre :
au moins un capteur de température destiné à mesurer la température du corps de bâti, sachant que l'au moins un capteur de température est connecté à une unité de commande, sachant que l'unité de commande commande l'un ou les plusieurs écrans de commande de température, en particulier pour fournir une commande en boucle fermée conjointement avec l'au moins un capteur de température.

9. Le dispositif selon la revendication 8, lorsqu'il dépend directement ou indirectement de la revendication 5, sachant que l'unité de commande est configurée pour faire varier le débit et/ou la température du fluide.

10. Le dispositif selon l'une quelconque des revendications 1 à 9, comprenant en outre :
un système d'amenée de lingot présentant un corps de structure, sachant que le corps de structure du système d'amenée de lingot est composé de fonte minérale, d'acier ou de fonte.

11. Le dispositif selon l'une quelconque des revendications 1 à 10, comprenant en outre :
un ou plusieurs capteurs de vibrations configurés pour surveiller les vibrations du corps de bâti, en particulier dans la zone des manchons de boîtier de logement.

12. Le dispositif selon l'une quelconque des revendications 1 à 11, sachant qu'au moins un élément sélectionné dans le groupe constitué par : une plaque, une tuyauterie de fluide, un connecteur électrique, un tube de faisceau de câble, et un conduit d'air, et un capteur est coulé dans le corps de bâti.

13. Procédé de fabrication d'un dispositif de sciage par fil (100), **caractérisé en ce qu'**il comprend
la fourniture d'un agencement d'écran de commande de température dans un moule ;
le coulage d'un corps de bâti (110) d'une tête de découpe comportant au moins quatre ouvertures (102) dans le moule, sachant que le matériau de coulage est composé d'un produit de remplissage minéral et d'un liant ; et
le collage et/ou l'enfoncement d'au moins quatre manchons de boîtier de logement (130) dans les au moins quatre ouvertures respectives.

14. Le procédé de la revendication 13, comprenant en outre :
la fourniture d'au moins un élément sélectionné dans le groupe constitué par : une plaque, une tuyauterie de fluide, un connecteur électrique, et un capteur, dans le moule avant le coulage du corps de bâti.

15. Le procédé de l'une quelconque des revendications 13 à 14, comprenant en outre :
le montage de boîtiers de logement pour cylindres de guidage de fil et de cylindres de guidage de fil devant être supportés par les manchons de boîtier de logement.
